Europäisches Patentamt

European Patent Office

Office européen des brevets

(19)

(11) Veröffentlichungsnummer: **0 268 719 B1**

# (12) EUROPÄISCHE PATENTSCHRIFT

(45) Veröffentlichungstag der Patentschrift: **18.09.91**

(51) Int. Cl.⁵: **B29C 51/06, B29C 51/36**

(21) Anmeldenummer: **86810533.9**

(22) Anmeldetag: **24.11.86**

(54) **Tiefziehform zum Verformen von duroplastischen Verbundstoffen und Verfahren zum Betrieb der Tiefziehform.**

(43) Veröffentlichungstag der Anmeldung:
**01.06.88 Patentblatt 88/22**

(45) Bekanntmachung des Hinweises auf die
Patenterteilung:
**18.09.91 Patentblatt 91/38**

(84) Benannte Vertragsstaaten:
**AT BE CH DE ES FR GB IT LI LU NL SE**

(56) Entgegenhaltungen:
**EP-A- 0 036 391**  **WO-A-86/00045**
**DE-A- 3 206 905**  **DE-A- 3 419 494**
**GB-A- 2 167 340**  **US-A- 2 917 783**
**US-A- 3 072 964**  **US-A- 3 353 219**
**US-A- 3 358 061**

(73) Patentinhaber: **POLYTEX PLASTIC SA**
**Grossfeld**
**CH-6234 Triengen(CH)**

(72) Erfinder: **Müller, Bruno**
**Gibelstrasse 39**
**CH-2540 Grenchen(CH)**

(74) Vertreter: **Seehof, Michel et al**
**c/o AMMANN PATENTANWAELTE AG BERN**
**Schwarztorstrasse 31**
**CH-3001 Bern(CH)**

## Beschreibung

Die vorliegende Erfindung bezieht sich auf eine Tiefziehform zum Verformen von duroplastischen Verbundwerkstoffen, wobei insbesondere an sogenannte Rovings und Prepregs gedacht ist, die gerichtete Fasern, beispielsweise aus Glas, Aramid, Stahl oder Kohlenstoff enthalten, sowie auf ein Verfahren zum Tiefziehen solcher Werkstoffe.

In der Technischen Rundschau Nr. 44-86 vom 31.10.1986, S. 23ff., ist eine grosse Anzahl von Verbundwerkstoffen beschrieben, die vielfältig angewendet werden können. Für eine gewisse Anzahl von Fällen sind lichthärtende Einkomponentensysteme anwendbar, die als vorimprägnierte Halbzeuge angeboten werden. In dem genannten Artikel, der den Stand der Technik zusammenfasst, wird dieses Halbzeug verwendet, um kompliziert geformte Wickelteile herzustellen. Es ist demgegenüber Aufgabe der vorliegenden Erfindung eine Vorrichtung und ein Verfahren anzugeben, mit welchen es möglich ist, insbesondere solche Prepregs, aber auch andere Verbundwerkstoffe einfach, schnell und genau herzustellen. Diese Aufgabe wird mit der in den unabhängigen Patentansprüchen beschriebenen Vorrichtung und dem Verfahren gelöst.

Die US-A-3 353 219 beschreibt eine Vakuumform, die vierschichtig konstruiert ist und eine fluiddichte Schicht mit einer darauf befindlichen dicken, porösen und starren Schicht aus groben Teilchen aufweist. Darüber liegt eine fluiddichte Folie und auf dieser eine dünne, feste Schicht feiner Teilchen. Die Form dient zum Verformen thermoplastischer Folien durch Vakuum, das aber nur an einer zentralen Stelle der Form angelegt wird, wodurch der Druckverlauf in der relativ dünnen, obersten porösen Schicht ungleichförmig ist. Eine Druckleitung zum vorbeigen Aufblasen der Ziehfolie ist nicht vorgesehen.

In der US-A-2 917 783 ist ein Verfahren zur Druck- und Vakuumverformung thermoplastischer Materialien beschrieben. Die darin beschriebenen Massnahmen und Vorrichtungen sind auf die Verformung ausschliesslich thermoplastischer Materialien ausgerichtet. Insbesondere ist die Form nicht aus porösem Material hergestellt, so dass keine kantigen Gegenstände erzeugt werden können, und die Thermoplastfolie wird bis zum Ausformen zwischen Formunterteil und Formoberteil ringsum festgeklemmt.

Mit den bekannten Vorrichtungen und Verfahren konnte daher die Aufgabe der Erfindung nicht gelöst werden.

Die Erfindung wird im folgenden anhand eines Ausführungsbeispiels einer Vorrichtung sowie den verschiedenen Verfahrensstufen zur Herstellung von geformten Stücken näher erläutert.

Fig. 1 zeigt die erfindungsgemässe Vorrichtung von oben,
Fig. 2 zeigt einen Längsschnitt von Fig. 1,
Fig. 3 zeigt einen Querschnitt der Fig. 1 in grösserem Massstab,
Fig. 4 zeigt eine Ausführungsvariante zu Fig. 3,
Fig. 5 zeigt eine Ausschnittsvergrösserung von Fig. 2,
Fig. 6 zeigt schematisch und in vergrössertem Massstab den Aufbau der Vorrichtung gemäss Fig. 1,
die Fig. 7 - 12 zeigen sechs Verfahrensschritte zur Herstellung eines Formteils.

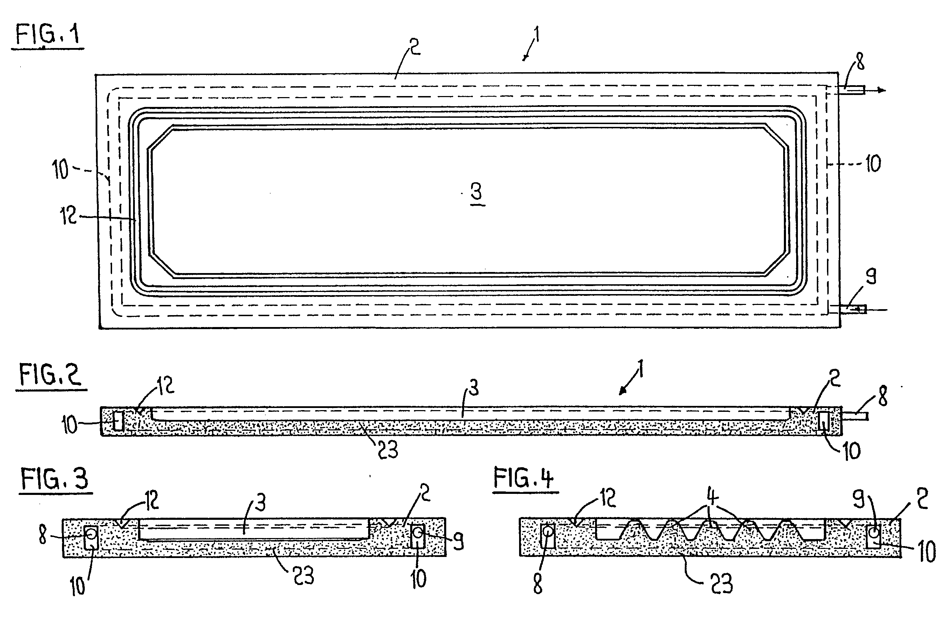

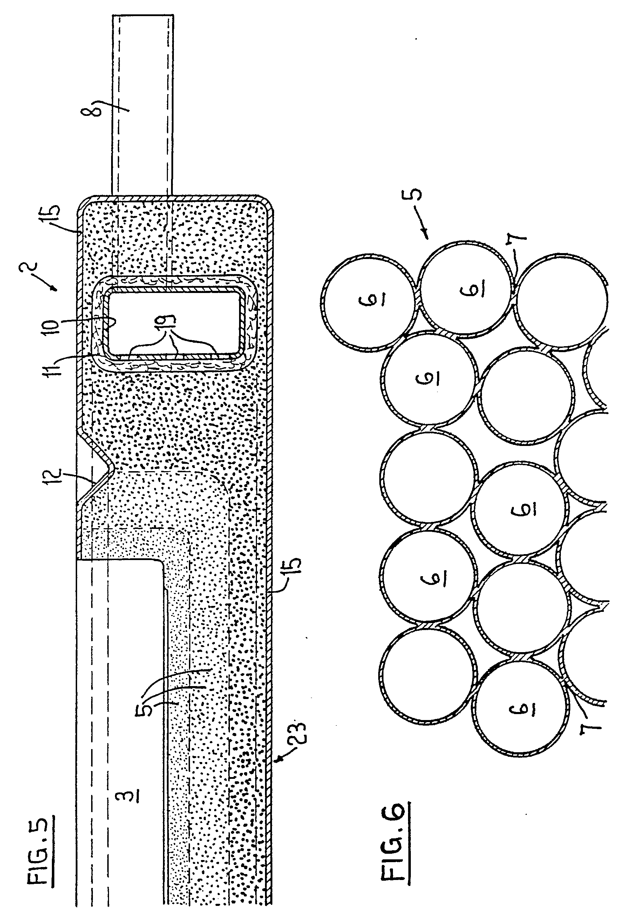

In den Fig. 1 - 6 ist der Aufbau eines Formunterteils 1 dargestellt, das aus einem Rand 2 und einem Innenraum 3 besteht. Der Boden 23 des Innenraums kann wie in Fig. 3 eben sein oder gemäss Fig. 4 Längsrippen 4 aufweisen. Wie in den Schnitten und insbesondere in Fig. 6 angedeutet, besteht das Formunterteil 1 aus einem porösen Material 5. Dieses poröse Material kann beispielsweise aus einer Aluminiumgranulat-Harzmischung bestehen, wobei die Aluminiumgranulatkügelchen 6 einen Durchmesser von beispielsweise 0,5 bis 4mm aufweisen können. Dabei hat es sich als vorteilhaft erwiesen, Körner verschiedener Grösse zu verwenden und innen, in der Nähe des zu formenden Teils, feinere Körner anzuordnen als aussen, wie dies in Fig. 5 schematisch durch drei Schichten angedeutet ist. Zur Herstellung des Formunterteils werden in einer anderen Form ein Gemisch aus Aluminiumgranulat 6 und Harz 7, etwa in einem Verhältnis von 1,5 - 1 zu 0,2 in Abhängigkeit vom Durchmesser des Aluminiumgranulats, eingegeben und erwärmt, bis die Harzschicht zu schmelzen beginnt und das Aluminiumgranulat miteinander verbindet, derart, dass wie in Fig. 6 angedeutet, Lücken entstehen, um die gewünschte Luftdurchlässigkeit zu erzielen. Anstatt Aluminiumgranulat können selbstverständlich auch andere Körner verwendet werden oder für Spezialfälle auch luftdurchlässiges natürliches Gestein.

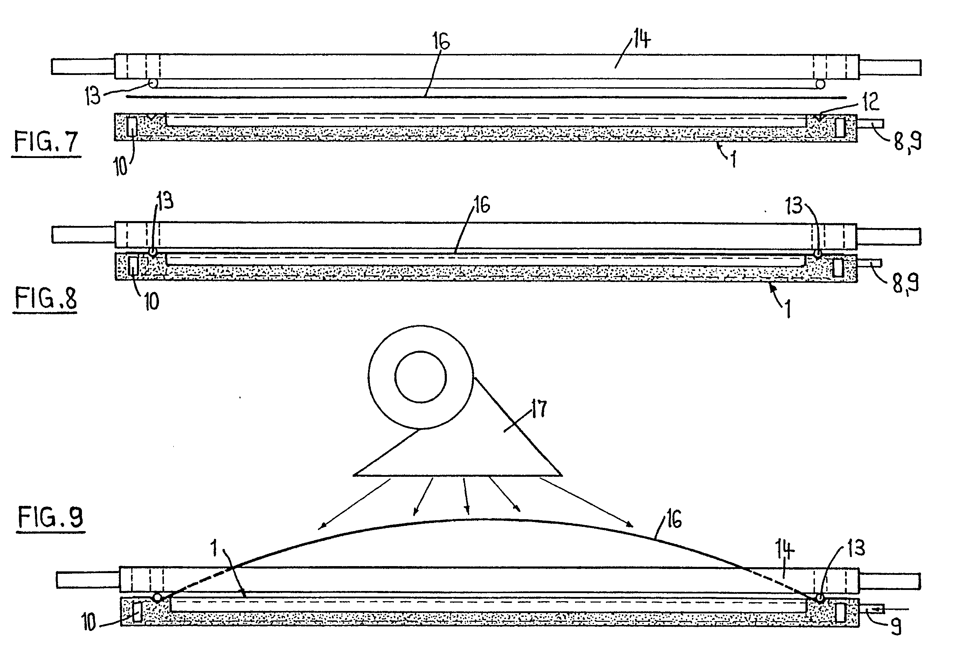

Das Formunterteil enthält 2 Anschlüsse, einen Anschluss für Vakuum 8 sowie einen Anschluss für Druckluft 9, s. Fig. 1. Beide Anschlüsse gelangen in eine ringförmige Leitung 10, die aus einem Metallrohr mit zum Innenraum gerichteten Oeffnungen 19 besteht, welches zweckmässigerweise mit einer luftdurchlässigen Glasfasermatte 11 isoliert ist. An der Oberseite befindet sich eine umlaufende, beispielsweise V-förmige Nut 12, in die ein umlaufender Pressring 13 am rahmenförmigen Formoberteil 14 greift, s. Fig. 7. Das Formunterteil 1 ist mit einer luftdichten Hülle 15 ummantelt, die das gesamte Formunterteil mit Ausnahme des Innenteils 3 umfasst.

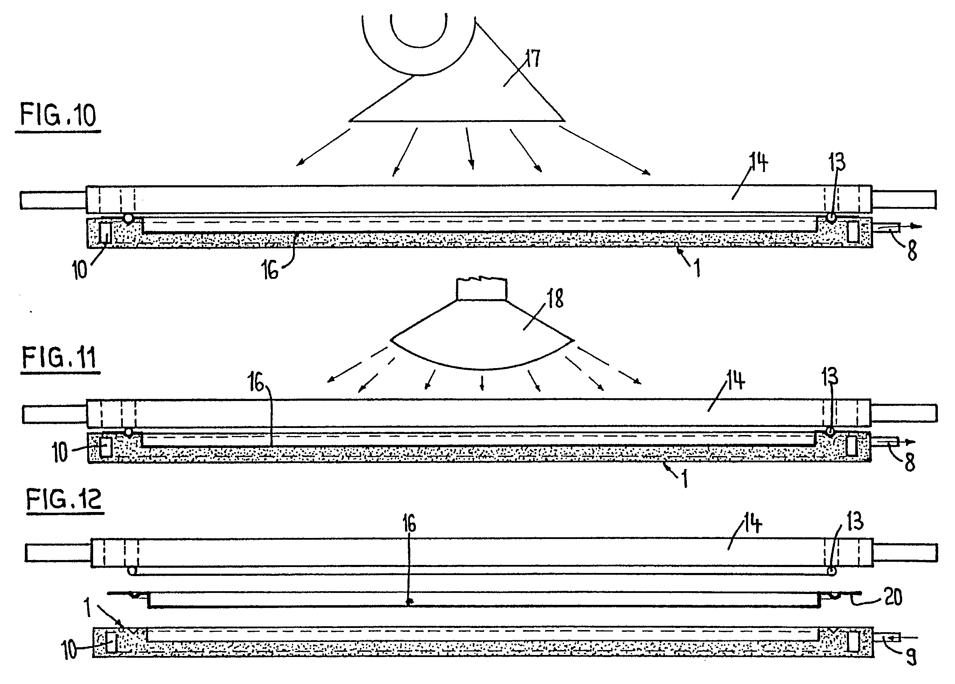

Die Verwendung der Form wird im folgenden anhand einer Herstellung eines Halbfabrikats gemäss den Fig. 7 - 12 erläutert. Als Material wird im vorliegenden Fall ein lichthärtendes, vorimprägniertes Halbzeug, beispielsweise ein Prepreg mit einem Glasfaserroving, verwendet. Die Materialbahn 16 wird auf das Formunterteil 1 gelegt und das Formoberteil 14 wird geschlossen, um die Bahn durch den Pressring zu spannen. Daraufhin wird durch den Einlass 9 Druckluft beaufschlagt, so dass sich das Bahnteil wölbt. Gleichzeitig wird das herausgewölbte Bahnteil mit einer Heizquelle 17, die ein Heissluftgebläse sein kann, erwärmt, wobei Sorge getragen wird, dass die Temperatur in vorliegendem Fall 80° nicht übersteigt. Dabei tritt eine Streckung um etwa 60% ein. Anschliessend wird, s. Fig. 10, die Vakuumquelle an den Anschluss 8 geschaltet und das erwärmte und gedehnte Material tiefgezogen. Da es sich um lichthärtendes Material handelt, wird daraufhin eine UV-Lichtquelle 18 angeschaltet und das geformte Stück dabei gehärtet, wobei in vorliegendem Fall und abhängig vom Material die Härtezeit 40s dauert. Anschliessend wird gemäss Fig. 12 der Rahmen 14 entfernt und das geformte Stück unter Druckluftbeaufschlagung aus der Form entnommen. Zur Weiterverarbeitung wird der Rand 20 des geformten Stücks abgetrennt.

Mit solchen Formen, beispielsweise auch mit einem Forminnenteil gemäss Fig. 4, können die unterschiedlichsten Formteile tiefgezogen und zu verschiedenen Gegenständen zusammengesetzt werden. Beispielsweise lassen sich damit verschiedene Container in Sandwichbauart zusammenstellen oder Teile für die Bauindustrie zusammensetzen, wie Gerüstplatten, Wände oder dergleichen. Aus obiger Beschreibung geht hervor, dass der Härtevorgang nicht notwendigerweise zum Verfahren gehört, so dass auch nicht-lichthärtende Materialien oder thermoplastische Materialien mit diesem Verfahren und mit dieser Vorrichtung tiefgezogen werden können. Wie bereits oben erwähnt, kommen als Material für die luftdurchlässige Form neben Aluminiumgranulaten auch andere Granulate in Frage.

## Patentansprüche

1. Tiefziehform zum Verformen von duroplastischen Verbundwerkstoffen, wobei die Tiefziehform einen porösen Formunterteil (1) mit Anschlüssen für Druckluft und Vakuum (8 bzw. 9) sowie eine luftdichte Hülle (15) aufweist, dadurch gekennzeichnet, dass das Formunterteil (1) aus Aluminiumgranulat (6) besteht, welches durch ein Harz (7) zusammengehalten ist, wobei im Formunterteil (1) die Anschlüsse für Druckluft (8) und Vakuum (9) in eine ringförmige luftdurchlässige Leitung (10) münden, dass die luftdichte Hülle (15) des Formunterteils (1) mit Ausnahme eines die Form bildenden Innenraumes (3) umgibt, wobei die luftdichte Hülle (15) an der Oberseite des Formunterteils (1) mit einer umlaufenden Nut (12) versehen ist, und dass ein rahmenförmiges Formoberteil (14) mit einem an der Unterseite befindlichen, in die Nut (12) passenden Pressring (13) vorhanden ist.

2. Tiefziehform nach Anspruch 1, dadurch gekennzeichnet, dass das Granulat Aluminiumkörner mit einem Durchmesser von 0,5 bis 4 mm aufweist und dass, beginnend beim Forminnenraum (3), Körner mit steigendem Durchmesser angeordnet sind.

3. Tiefziehform nach Anspruch 1 oder 2, dadurch gekennzeichnet, dass sie eine Wärmequelle (17) aufweist.

4. Tiefziehform nach Anspruch 3, dadurch gekennzeichnet, dass sie eine UV-Lichtquelle (18) aufweist.

5. Tiefziehform nach Anspruch 3, dadurch gekennzeichnet, dass die Wärmequelle (17) ein Heissluftgebläse ist.

6. Verfahren zur Herstellung von tiefgezogenen Duroplast-Teilen unter Verwendung der Vorrichtung nach Anspruch 3, dadurch gekennzeichnet, dass eine Duroplast-Prepreg-Bahn (16) auf das Formunterteil (1) gelegt und dort mit dem Formoberteil (14) festgehalten wird, das Formunterteil mit Druckluft beaufschlagt und die Bahn von obnen erwärmt wird, wobei die Bahn (16) nach oben gewölbt wird, dass anschliessend das Formunterteil mit Vakuum beaufschlagt und dabei die Bahn angesaugt und tiefgezogen wird, dass dann das geformte Prepreg in der Form durch UV-Bestrahlung gehärtet wird, und dass der gebildete Duroplast-Formling nach Abnehmen des Formoberteiles (14) mittels Druckluft abgehoben wird.

## Claims

1. A deep-drawing mould for moulding duroplastic composite materials, said deep-drawing mould comprising a porous lower mould portion (1) having connections for compressed air and for vacuum (8 resp. 9) as well as an air-tight enclosure (15), characterized in that the lower mould portion (1) consists of granulated aluminium (6) which is held together by a resin (7), the connections for compressed air (8) and vacuum (9) in the lower mould portion (1) extending into an annular conduit (10) which is permeable to air, that the air-tight enclosure (15) surrounds the lower mould portion (1) except a mould interior (3) which forms the mould, said air-tight enclosure (15) being provided on the upper side of the lower mould portion (1) with a circular groove (12), and that a frame-shaped upper mould portion (14) is provided, said portion having on its underside a press-ring (13) which fits into the groove (12).

2. A deep-drawing mould according to claim 1, characterized in that said granulated material comprises granules from 0.5 to 4 mm in diameter and that, starting from the mould interior, granules with increasing diameters are provided.

3. A deep-drawing mould acoording to claim 1 or 2, characterized in that it is provided with a heat source (17).

4. A deep-drawing mould according to claim 3, characterized in that it is provided with an ultraviolet light source (18).

5. A deep-drawing mould according to claim 3, characterized in that said heat source (17) is a hot-air fan.

6. A method for the manufacture of deep-drawn duroplastic parts using the device of claim 3, characterized in that a duroplastic prepreg web (16) is placed upon the lower mould portion (1) and kept in place by the upper mould portion (14), compressed air is applied to the lower mould portion and the web is heated from above, whereby the web (16) is arched upwards, that subsequently a vacuum is applied to the lower mould portion and the web is thereby aspirated and deep-drawn, and that the moulded prepreg is then hardened in the mould by irradiation with ultraviolet light, and that the obtained duroplastic moulded part is lifted off by means of compressed air after the upper mould portion (14) has been removed.

**Revendications**

1. Moule pour formage par dépression de matériaux composites duroplastiques, ledit moule présentant une partie inférieure (1) qui comporte des raccordements d'air comprimé et de vide (8 et 9) ainsi qu'une enveloppe (15) imperméable à l'air, caractérisé en ce que ladite partie inférieure (1) du moule consiste en granulé d'aluminium (6) lié par une résine (7), les raccordements d'air comprimé (8) et de vide (9) dans la partie inférieure (1) du moule communiquant avec une conduite (10) annulaire perméable à l'air, que l'enveloppe (15) imperméable à l'air entoure la partie inférieure du moule (1) à l'exception d'un intérieur (3) qui forme le moule, l'enveloppe imperméable à l'air (15) étant munie d'une rainure circulaire (12) sur le côté supérieur de la partie inférieure (1) du moule, et qu'il existe une partie supérieure (14) du moule qui comporte sur le côté inférieur un anneau de serrage (13) adapté à la rainure (12).

2. Moule pour formage par dépression selon la revendication 1, caractérisé en ce que le granulé présente des granules d'aluminium d'un diamètre de 0,5 à 4 mm, et que des granules de diamètre croissant sont disposés à partir de l'intérieur (3) du moule.

3. Moule pour formage par dépression selon la revendication 1 ou 2, caractérisé en ce qu'il comporte une source de chaleur (17).

4. Moule pour formage par dépression selon la revendication 3, caractérisé en ce qu'il comporte une source de lumière ultraviolette.

5. Moule pour formage par dépression selon la revendication 3, caractérisé en ce que la source de chaleur (1) est un ventilateur à air chaud.

6. Procédé pour la fabrication de pièces formées par dépression en matière duroplastique en utilisant le dispositif selon la revendication 3, caractérisé en ce qu'une bande en matière duroplastique préimprégnée (16) est posée sur la partie inférieure (1) du moule et y est maintenue par la partie supérieure (14) du moule, et de l'air comprimé est appliqué à la partie inférieure du moule et la bande est chauffée depuis le haut, de sorte que la bande (16) se voûte vers le haut, que la partie inférieure du moule est ensuite mise sous vide et la bande est alors aspirée et formée, que par la suite, la pièce préimprégnée formée est durcie par irradiation ultraviolette, et que la pièce moulée en matière duroplastique est détachée à l'aide d'air comprimé après enlèvement de la partie supérieure (14) du moule.

FIG.1

FIG.2

FIG.3

FIG.4

EP 0 268 719 B1

FIG.5

FIG.6

EP 0 268 719 B1

FIG.7

16    14

13

12

8,9

10    1

FIG.8

13    16    13

8,9

10    1

FIG.9

17

16

1

14    13

10    9

EP 0 268 719 B1

FIG.10

FIG.11

FIG.12